(19) Europäisches Patentamt
European Patent Office
Office européen des brevets

(11) **EP 1 979 768 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**16.02.2022 Patentblatt 2022/07**

(45) Hinweis auf die Patenterteilung:
**26.09.2018 Patentblatt 2018/39**

(21) Anmeldenummer: **07702795.1**

(22) Anmeldetag: **16.01.2007**

(51) Internationale Patentklassifikation (IPC):
*B42D 25/29* (2014.01) *B42D 25/328* (2014.01)
*B42D 25/00* (2014.01) *B42D 25/47* (2014.01)
*G07D 7/00* (2016.01) *G02B 3/00* (2006.01)

(52) Gemeinsame Patentklassifikation (CPC):
**B42D 25/328; B42D 25/00; G02B 3/0043;**
**G02B 3/005; G02B 3/0068; G07D 7/003;**
B42D 2033/04; B42D 2035/20; B42D 2035/44;
B42D 2035/50; G02B 3/0006; G02B 3/0018;
G02B 3/0031

(86) Internationale Anmeldenummer:
**PCT/EP2007/000338**

(87) Internationale Veröffentlichungsnummer:
**WO 2007/087984 (09.08.2007 Gazette 2007/32)**

(54) **MEHRSCHICHTKÖRPER MIT MIKROLINSEN-ANORDNUNG**

MULTILAYER BODY WITH MICROLENS ARRANGEMENT

CORPS MULTICOUCHES DOTE D'UN SYSTEME DE MICROLENTILLES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.02.2006 DE 102006005000**

(43) Veröffentlichungstag der Anmeldung:
**15.10.2008 Patentblatt 2008/42**

(73) Patentinhaber: **OVD Kinegram AG**
**6300 Zug (CH)**

(72) Erfinder:
• **SCHILLING, Andreas**
**6332 Hagendorn (ZG) (CH)**
• **TOMPKIN, Wayne, Robert**
**5400 Baden (CH)**

(74) Vertreter: **Zinsinger, Norbert et al**
**Louis, Pöhlau, Lohrentz**
**Patentanwälte**
**Postfach 30 55**
**90014 Nürnberg (DE)**

(56) Entgegenhaltungen:

| | |
|---|---|
| EP-A1- 0 698 256 | EP-A1- 1 238 373 |
| WO-A-00/25276 | WO-A-96/22558 |
| WO-A-99/23513 | WO-A1-03/052680 |
| WO-A1-03/061983 | WO-A2-2005/052650 |
| WO-A2-2005/106601 | DE-A1- 19 729 918 |
| DE-U1-202004 019 493 | US-A- 4 765 656 |
| US-A- 5 351 151 | US-A1- 2002 012 447 |
| US-A1- 2002 027 300 | US-A1- 2005 057 036 |
| US-A1- 2005 141 096 | US-A1- 2005 180 020 |
| US-A1- 2007 058 260 | US-B2- 6 700 702 |

EP 1 979 768 B2

**Beschreibung**

Die Erfindung betrifft einen Mehrschichtkörper mit einer Mikrolinsen-Anordnung, der vorzugsweise als optisches Sicherheitselement verwendbar ist.

Optische Sicherheitselemente finden Anwendung in Fensterbanknoten, ID-Karten, Reisepässen und ähnlichen Sicherheitsdokumenten, um die Echtheit dieser Dokumente mit einfachen Mitteln überprüfen zu können und die Fälschung der Dokumente zu erschweren.

Es sind Lösungen für optische Sicherheitselemente bekannt, die Mikrolinsen zur Erzeugung optischer Effekte vorsehen.

In WO 03/061983 A1 ist ein optisches Sicherheitselement mit einer Oberflächenstruktur beschrieben, die eine Vielzahl von mikrooptischen Strukturen aufweist, die in einem spezifischen Muster angeordnet sind. Bei den mikrooptischen Strukturen handelt es sich beispielsweise um Zylinderlinsen, die mit lichtsammelnden Strukturen zusammenwirken und so flächig angeordnete Mikrobilder im Auge eines Betrachters zu einem Stereobild zusammenfügen.

In EP 0 698 256 B2 ist ein optisches Sicherheitselement beschrieben, das eine regelmäßige zweidimensionale Anordnung aus sphärischen Mikrolinsen aufweist, die über einer regelmäßigen Anordnung von im wesentlichen identischen gedruckten Mikrobildern angeordnet ist, wobei die Größe und die Anzahl der wahrnehmbaren Bilder davon abhängt, wie exakt die Mikrobilder und Mikrolinsen zueinander ausgerichtet sind. Bei exakter Ausrichtung ist ein Bild in maximaler Größe wahrnehmbar, mit zunehmender Abweichung steigt die Anzahl der Bilder und sinkt die Bildgröße. Ausgestaltungen sehen beispielsweise die Erzeugung von Stereobildern vor.

In US 2002/0012447 A1 sind ein Verfahren und eine Vorrichtung beschrieben, bei denen u.a. über geometrische Strukturen gelegte Mikrolinsen-Anordnungen charakteristische Moire-Muster erzeugen. Es ist vorgesehen, die so erzeugten Moire-Musters zur Echtheitsprüfung heranzuziehen, indem ein Vergleich mit einem Referenzmuster durchgeführt wird.

In EP 1 238 373 B1 sind ein Verfahren und eine Vorrichtung beschrieben, um durch Übereinanderlegen eines Hauptrasters und eines Grundrasters ein charakteristisches Moire-Intensitätsprofil zu erzeugen. Bei dem Hauptraster kann es sich um eine Mikrolinsen-Anordnung handeln: Es ist vorgesehen, die Echtheitsprüfung durch Vergleich des Moire-Intensitätsprofils mit einem im voraus gespeicherten Moire-Intensitätsprofil vorzunehmen.

Der Erfindung liegt nun die Aufgabe zugrunde, einen Mehrschichtkörper zu schaffen, der als optisches Sicherheitselement verwendbar ist, das kostengünstig herstellbar ist und optische Effekte zeigt, die für jedermann leicht erkennbar und zugleich verblüffend oder überraschend und deshalb leicht einprägsam sind.

Die Aufgabe der Erfindung wird mit den in Anspruch 1 definierten Merkmalen gelöst.

Der erfindungsgemäße Mehrschichtkörper weist also erste Teilbereiche auf, in denen zumindest die zweite Schicht opak ausgebildet ist; und er weist zweite Teilbereiche auf, in denen alle Schichten des Mehrschichtkörpers transparent ausgebildet sind. Im Bereich der zweiten Teilbereiche ist der Mehrschichtkörper durchgehend transparent, d.h., die Schichten des Mehrschichtkörpers sind im Bereich der zweiten Teilbereiche transparent ausgebildet.

Ein solcher Mehrschichtkörper bildet bei der Betrachtung von der Vorderseite her und von der Rückseite her sehr unterschiedliche optische Effekte aus, die ein schwer nachahmbares Sicherheitsmerkmal bilden. Die in einer der ersten Schichten ausgeformten Mikrolinsen bilden ein optisches Abbildungssystem, das zur Vergrößerung der Mikromuster geeignet ist. Durch die Mikrolinsen wird jeweils ein Bildpunkt des Mikromusters pro Mikrolinse selektiert. Durch die Mikrolinsen geschieht dies sehr lichtstark, prinzipiell würde eine Lochmaske aber auch funktionieren. Das Mikromuster besteht aus ersten Teilbereichen, die für den menschlichen Betrachter bzw. das menschliche Auge opak, also lichtundurchlässig (durch Absorption oder Reflexion des einfallenden Lichtes) erscheinen und zweiten Teilbereichen, die für den menschlichen Betrachter bzw. das menschliche Auge transparent, also lichtdurchlässig erscheinen. Der auf diese Weise erzeugte Gesamteindruck zeigt transparente Bildbereiche, die in Abhängigkeit von der Blickrichtung ihre Lage wechseln, so daß es scheinen kann, daß ein transparenter Bildbereich vor einem opaken Hintergrund schwebt. Bilder können scheinbar hinter der Oberfläche des Mehrschichtkörpers erscheinen oder vor oder in dessen Oberfläche, abhängig davon, ob die Rasterweite der Mikrolinsen kleiner oder größer als die Rasterweite der Mikrobilder ist. Wenn die beiden Rasterweiten exakt gleich sind, jedoch etwas gegeneinander verdreht sind, ist der interessante Effekt zu beobachten, daß sich Bilder von links nach rechts zu bewegen scheinen, wenn der Mehrschichtkörper etwas zurück und vor bewegt wird und Bilder sich vor und zurück zu bewegen scheinen, wenn der Mehrschichtkörper nach links und rechts bewegt wird.

Es ist weiter möglich, daß Bilder seitenverkehrt bzw. gedreht dargestellt werden, d.h. die Bilder können vergrößerte Versionen der Mikromuster sein (Vergrößerung > 1) oder die Bilder können seitenverkehrte bzw. gedrehte Versionen der Mikromuster sein (Vergrößerung < -1).

Bei der Betrachtung von der Rückseite her erscheint der Mehrschichtkörper dagegen als opake Fläche, die beispielsweise eine Information in Art eines Graustufenbildes zeigen kann. Dieser scheinbare Widerspruch zwischen den beiden optischen Eindrücken zeigt sich sowohl im Auflicht als auch im Durchlicht und ist sehr auffällig und einprägsam.

Unvermeidliche Fertigungstoleranzen bezüglich des Radius der Mikrolinsen, der Brechzahl und der Dicke der Mikrolinsenschicht beeinträchtigen die Funktionsfähigkeit des erfindungsgemäßen Mehrschichtkörpers nicht. Wie Versuche ergeben haben, kann die Dicke der Mikrolinsenschicht zwischen 10% bis 20% der Brennweite vom Sollwert abweichen.

Vorteilhafte Ausgestaltungen der Erfindung sind in den Unteransprüchen bezeichnet.

Es kann vorgesehen sein, daß die transparenten zweiten Teilbereiche eine bildliche Darstellung bilden, und daß die opaken ersten Teilbereiche einen Hintergrundbereich bilden, von dem sich die bildliche Darstellung abhebt. Hierdurch ergeben sich weitere interessante Effekte. Es kann beispielsweise der Eindruck entstehen, durch ein Schlüsselloch zu schauen und dabei auf eine leuchtende Fläche zu blicken. Dieser Schlüssellocheffekt ist unerwartet, weil der Betrachter auf eine scheinbar durchgängig opake Fläche blickt, wenn er einen anderen Betrachtungswinkel wählt oder den Mehrschichtkörper von der anderen Seite betrachtet.

Weiter kann vorgesehen sein, daß der Flächenanteil der opaken ersten Teilbereiche zur Gesamtfläche der ersten und zweiten Teilbereiche 20% bis 60% ist. In diesem Bereich ist der oben beschriebene Effekt besonders signifikant ausgeprägt. Je höher der Flächenanteil der opaken Teilbereiche an der Gesamtfläche ist, desto kleiner sind die den Schlüssellocheffekt bildenden transparenten Bildbereiche und umgekehrt.

Es kann vorgesehen sein, daß es sich bei der bildlichen Darstellung um eine geometrische Figur, um ein oder mehrere alphanumerisches Zeichen oder um ein Logo handelt. Wenn der erfindungsgemäße Mehrschichtkörper als Sicherheitselement in einer mit einem Fenster ausgebildeten Banknote eingesetzt wird, kann es sich bei dem Mikromuster um ein Währungssymbol handeln, beispielsweise um ein Euro- oder Dollar-Zeichen. Durch die Kombination der vorstehend genannten Ausbildungen der Mikromuster mit dem Hintergrundbereich können weitere interessante optische Effekte ausgebildet werden. So kann beispielsweise ein alphanumerisches Zeichen vor einem holographischen Hintergrund dargestellt werden, d.h. der erste opake Teilbereich kann als Hologramm oder KINEGRAM® ausgebildet sein. Beispielsweise kann ein holografischer Hintergrundbereich durch das vorstehend genannte Euro- oder Dollar-Zeichen perforiert erscheinen, die wiederum wie ein Schlüsselloch den Blick auf eine transparente leuchtende Fläche lenken. Dabei kann das Euro- oder Dollar-Zeichen beim Ändern der Betrachtungsrichtung scheinbar über das Hologramm wandern. Das Hologramm oder KINEGRAM® kann in seiner Qualität durch die Mikrolinsen etwas eingeschränkt sein, wobei die Mikrolinsen für das Hologramm oder KINEGRAM® nicht vergrößernd wirken.

Die Mikrolinsen können beispielsweise durch Heißprägen in eine thermoplastische Folie oder durch Prägen und Aushärten einer UV-härtbaren Schicht geformt werden. Diese Herstellungsverfahren sind aus der Herstellung von mehrschichtigen Übertragungsfolien bekannt. Die Mikrolinsen können auch durch Intagliodruck erzeugt werden, wobei durch unterschiedliche Brechzahlen der Mikrolinsen und des Trägermaterials u.U. ein Helligkeitsverlust eintreten kann infolge von Totalbrechung an der Grenzfläche für große Bildwinkel. Die Mikrolinsen können auch durch Aufschmelzen von abgetrennten Oberflächenbereichen gebildet werden, wobei die aufgeschmolzenen Oberflächenbereiche infolge der Oberflächenspannung eine Kugelform einnehmen. Es ist auch möglich, asphärische Linsen auszuformen, die beträchtliche Vorteile bezügliche der Tiefenschärfe und dem Abbildungswinkel haben können. Asphärische Linsen können erzeugt werden mit der sog. Reflow-Methode in Kombination mit reaktivem Ionenätzen oder Graustufen-Technologien (z.B. HEBS-Glas oder Erzeugung mit Elektronenstrahl). Weiter ist es möglich, daß die Mikrolinsen als diffraktive Mikrolinsen (gegen Luft oder eingebettet in weiteren Materialschichten), als diffraktive Linsen (d.h. als entsprechendes Präge- oder Volumenhologramm) oder realisiert als Gradienten-Index in einer optisch transparenten Schicht realisiert sind.

Wie oben beschrieben ist vorgesehen, daß die Mikromuster Bildpunkte eines Graustufenbildes bilden, wobei die Abmessungen der Bildpunkte < 300 μm sind. Bei dem Graustufenbild handelt es sich um ein Bild, dessen Bildpunkte sich durch ihren Grauwert unterscheiden. Der Grauwert kann im allgemeinen als Helligkeitswert einer Farbfläche verstanden sein. Die Grundfarbe eines Graustufenbildes muß deshalb nicht Grau sein. Ein Graustufenbild kann auch eingefärbt sein, wie beispielsweise von sepiagetönten Schwarzweiß-Fotos bekannt. Die Farbe des Graustufenbildes kann auch durch die Farbe des für den Aufbau der Mikromuster vorgesehenen Materials bestimmt sein, zum Beispiel kann das Graustufenbild bei Verwendung von Gold goldfarben erscheinen oder bei einer Druckfarbe deren Farbton aufweisen. Weiter kann vorgesehen sein, daß das Mikromuster aus zwei Schichten aufgebaut ist, die einen unterschiedlichen Farbeindruck hervorrufen, so daß bei Betrachtung der Vorderseite ein anderer Farbeindruck ausgebildet ist als bei Betrachtung der Rückseite. Es kann auch vorgesehen sein, eine der Schichten vollflächig aufzubringen und für einen begrenzten Spektralbereich transparent auszubilden. Es kann sich bei den Bildpunkten auch um in verschiedenen Farben irisierende Bildpunkte handeln. Wie weiter oben beschrieben, können die Mikromuster unterschiedliche Grauwerte aufweisen, die eine Graustufenskala bilden.

Es kann vorgesehen sein, daß Mikromuster einen unterschiedlichen Grauwert aufweisen, indem die Opazität der ersten Teilbereiche und/oder die Transparenz der zweiten Teilbereiche variiert ist. Die Bildpunkte weisen demnach ein unterschiedliches Reflexionsvermögen auf (wenn Betrachtung im Auflicht vorgesehen ist) oder eine unterschiedliche Opazität auf (wenn Betrachtung im Durchlicht vorgesehen ist). Die Opazität ist ein Maß für die Lichtundurchlässigkeit von Stoffen. Das Gegenteil der Opazität ist die Transparenz, die ein Maß für die Lichtdurchlässigkeit von Stoffen ist. Opazität und Transparenz sind auf die optische Dichte oder Extinktion zurückzuführen, die ein Maß für die Abschwächung einer Strahlung, zum Beispiel Licht, in einem Medium ist. Der Anteil der durchgelassenen Strahlung wird als Transmissionsgrad bezeichnet. Die optische Dichte ist der negative dekadische Logarithmus des Transmissionsgrades. Die Einteilung in opake erste Teilbereiche und transparente zweite Teilbereiche ist bezüglich dieser Ausführungsform der Erfindung so, daß die opaken ersten Teilbereiche deutlich weniger transparent sind als die transparenten zweiten Teilbereiche und insbesondere durch einen menschlichen Beobachter opake und transparente Teilbereiche als solche erkennbar und deutlich voneinander unterscheidbar sind.

Durch die weiter oben beschriebene bildpunktweise Vergrößerung der Bildpunkte der Mikromuster erscheint das vergrößerte Mikromuster trotz Variation des Grauwertes der Mikromuster im allgemeinen mit homogenem Grauwert. Es ist jedoch auch möglich, das von der Rückseite des erfindungsgemäßen Mehrschichtkörpers sichtbare Graustufenbild so auszubilden, daß sich bei der Betrachtung des von der Vorderseite des Mehrschichtkörpers her sichtbaren vergrößerten Abbildes ein weiterer interessanter optischer Effekt einstellt, beispielsweise daß die vergrößerte bildliche Darstellung einen Transparenzverlauf aufweist und/oder daß der opake Hintergrundbereich einen Opazitätsverlauf aufweist. Es ist also möglich, Bildpunkte mit unterschiedlichen Grauwerten für ein Graustufenbild bereitzustellen, das von der den Mikrolinsen abgewandten Seite der zweiten Schicht her sichtbar ist.

Das unbewaffnete Auge ist nicht in der Lage, die oben beschriebenen Bildpunkte der Abmessungen < 300 μm als ein Mikromuster zu erkennen. Es kann sogar nicht in der Lage sein, die aus Mikromustern gebildeten Bildpunkte als getrennte Bildpunkte aufzulösen, so daß es das Graustufenbild nur in seiner Gesamtheit wahrnimmt.

In einer weiteren vorteilhaften Ausgestaltung ist vorgesehen, daß die Mikrolinsen und die Mikromuster eine repetitive Anordnung aufweisen.
Bei dem Raster kann es sich um ein gitterförmiges Raster handeln mit orthogonalen Begrenzungslinien. Es kann sich aber auch um ein anderes Raster handeln, beispielsweise um ein hexagonales Raster. Das Raster kann auch mit schiefwinkligen Begrenzungslinien ausgebildet sein oder zu den Begrenzungskanten des Mehrschichtkörpers um einen Winkel gedreht sein.

Es kann vorgesehen sein, daß die Mikrolinsen und die Mikromuster jeweils in einem zweidimensionalen Raster angeordnet sind, wobei die Rasterweite insbesondere 20 μm bis 50 μm beträgt.

Es kann weiter vorgesehen sein, daß die Raster der Mikrolinsen und der Mikromuster übereinstimmen. Mikrolinsenraster und Mikromusterraster können auch gegeneinander verdreht sein (u.U. sehr wenig, wie zum Beispiel einige Zehntel Grad), vor allem für den Fall, daß die Rasterweiten identisch sind.

Alternativ kann vorgesehen sein, daß die Raster der Mikrolinsen und der Mikromuster verschieden sind. Es kann so beispielsweise ein Moire-Effekt erzeugt sein, der ein charakteristisches optisches Merkmal sein kann.

In einer weiteren Ausgestaltung ist vorgesehen, daß die Rasterweite der Mikrolinsen und/oder der Mikromuster konstant ist. Bei konstanter Rasterweite sind Δx(x,y) und Δy(x,y) konstant (x,y: Koordinaten-Achsen der von der Oberfläche des Mehrschichtkörpers aufgespannten Ebene; Δx, Δy: Abstand der Mikromuster in x- bzw. y-Richtung voneinander). Es kann vorgesehen sein, daß das Mikrolinsen-Array und das Mikromuster-Array identische Raster aufweisen, die jedoch gegeneinander verdreht sind.

Es kann aber auch vorgesehen sein, daß die Rasterweite der Mikrolinsen und/oder der Mikromuster variabel ist. Die Rasterweite kann dann von den Koordinaten eines Punktes abhängig sein, also

$$\Delta x = \Delta x(x,y)$$

und

$$\Delta y = \Delta y(x,y).$$

Eine variable Rasterweite kann beispielsweise den weiter oben genannten Moire-Effekt auslösen, sie kann aber auch dafür genutzt werden, um den Mikrolinsen die Bildpunkte der Mikromuster zuzuordnen und so gestalterischen Einfluß auf die Ausbildung des bzw. der vergrößerten Mikromuster zu nehmen. Die Rasterweite kann beispielsweise aufgrund einer speziell definierten mathematischen Funktion variieren.

Es kann weiter vorgesehen sein, daß die Raster der Mikrolinsen und der Mikromuster zueinander versetzt sind.

Die Mikromuster selber können sich auch ändern, beispielsweise können mehrere Mikromuster in Teilrastern angeordnet sein. Auf diese Weise kann beispielsweise eine spiralförmige Anordnung vorgesehen sein.

Es können mehrere unterschiedliche Mikromuster in geordneter Anordnung angeordnet sein, wodurch beispielsweise ein Stereo- oder Pseudostereo-Effekt ausgebildet werden kann. Es kann auch vorgesehen sein, bei unterschiedlichem Betrachtungswinkel unterschiedliche vergrößerte Mikromuster darzustellen, wodurch beispielsweise ein Bewegungseffekt oder ein Morphing-Effekt erzeugbar ist.

In einer weiteren vorteilhaften Ausgestaltung ist vorgesehen, daß die Mikrolinsen und die Mikromuster im Register angeordnet sind. Die Anordnung im Register ist zwar nicht zwingend für die Ausbildung der vorstehend beschriebenen optischen Effekte, doch werden auf diese Weise besonders gut reproduzierbare Ergebnisse erreicht. Nachahmungen, die beispielsweise durch Übereinanderfügen getrennt hergestellter Mikrolinsenarrays und Mikromusterarrays erzeugt werden, sind nur mit hohem Aufwand in gleichbleibender Qualität herstellbar. Die Anordnung im Register kann auch vorgesehen sein für nicht-repetitive Raster, beispielsweise für deformierte, transformierte oder verzerrte Raster.

In einer nicht beanspruchten Ausgestaltung ist vorgesehen, daß die Mikromuster der zweiten Schicht jeweils von einem als Mikroloch ausgebildeten transparenten zweiten Teilbereich und von einem den zweiten Teilbereich vollständig umgebenden opaken ersten Teilbereich der zweiten Schicht gebildet sind..

Weiter ist vorgesehen, daß die Mikrolinsen und die Mikrolöcher eine repetitive Anordnung aufweisen. Vorteilhafterweise ist vorgesehen, daß die Mikrolinsen und die Mikrolöcher jeweils in einem zweidimensionalen Raster angeordnet sind. Vorzugsweise stimmen die beiden Raster überein, so daß zu jedem Mikroloch eine Mikrolinse zugeordnet ist. Die Mikrolöcher können zwar mit beliebiger Kontur ausgebildet sein, doch ist die mit der Mikrolinsenform korrespondierende kreisförmige Lochkontur bevorzugt.

Weiter kann vorgesehen sein, daß die Mikrolinsen und die Mikrolöcher im Register angeordnet sind, wobei die Brennpunkte der Mikrolinsen mit den Mittelpunkten der Mikrolöcher korrespondieren. Auf diese Weise ist also genau eine Mikrolinse über einem Mikroloch angeordnet, wobei sich das Mikroloch in der Brennebene der Mikrolinse befindet.

Es ist weiter vorgesehen, daß der Durchmesser der Mikrolinse größer als der Durchmesser des Mikrolochs ist. Auf diese Weise ist der erfindungsgemäße Mehrschichtkörper als ein richtungsabhängiges Filter ausgebildet. Wenn vor der Rückseite des Mehrschichtkörpers eine Lichtquelle angeordnet ist, wirken die Mikrolöcher als Blenden, die nur einen Teil der auf den Mehrschichtkörper auftreffenden Strahlen der Lichtquelle hindurchtreten lassen. Der Mehrschichtkörper kann also in einer solchen Anordnung beispielsweise als Sonnenschutz verwendet werden. Wenn jedoch vor der Vorderseite des Mehrschichtkörpers eine Lichtquelle angeordnet ist, bündeln die Mikrolinsen die Strahlen und leiten sie konzentriert durch die Mikrolöcher hindurch. Auf diese Weise werden nahezu alle auf den Mehrschichtkörper auftreffenden Strahlen hindurchgelassen, und die Rückseite des Mehrschichtkörpers erscheint als transparent leuchtende Fläche.

Es kann vorgesehen sein, daß der Durchmesser des Mikrolochs 1 % bis 50 % des Durchmessers der Mikrolinse beträgt.

Der vorstehend beschriebene Mehrschichtkörper kann beispielsweise als die Übertragungslage einer Transferfolie ausgebildet sein, die auf Fensterscheiben oder dergleichen aufbringbar ist. Die Folie kann auch auf um 180° schwenkbare Lamellen einer vor oder hinter einem Fenster angeordneten Sonnenschutzvorrichtung aufgebracht werden, die in den beiden Endstellungen eine durchgehende Fläche bilden. Die Sonnenschutzvorrichtung kann in der einen Stellung der Lamellen als hoch wirksamer Sonnenschutz und in der anderen Stellung der Lamellen als hoch lichtdurchlässiger Sichtschutz verwendet werden. In der 90°-Zwischenstellung kann sie den Blick durch die Fensterscheibe freigeben.

Die Herstellung der feinen Strukturen der Mikromuster kann erleichtert sein, wenn vorgesehen ist, daß die zweite Schicht in den opaken ersten Teilbereichen und in den transparenten zweiten Teilbereichen eine Oberflächenstruktur mit unterschiedlichem Tiefen-zu-Breiten-Verhältnis aufweist. Die Dicke der zweiten Schicht kann mit Hilfe des Tiefen-zu-Breiten-Verhältnisses der Oberflächenstruktur der ersten Schicht eingestellt werden, auf die die zweite Schicht aufgebracht ist. Es kann vorgesehen sein, daß die zweite Schicht mit konstanter Flächendichte aufgebracht wird, beispielsweise durch Sputtern. Die effektive Dicke der zweiten Schicht ist dabei um so geringer, je höher das Tiefen-zu-Breiten-Verhältnis der besagten Oberflächenstruktur ist. Das dimensionslose Tiefen-zu-Breiten-Verhältnis, häufig auch als Aspektrate bezeichnet, ist ein kennzeichnendes Merkmal für die Oberflächenvergrößerung vorzugsweise periodischer Strukturen. Eine solche Struktur weist in periodischer Abfolge "Berge" und "Täler" auf. Als Tiefe ist hier der Abstand zwischen "Berg" und "Tal" bezeichnet, als Breite der Abstand zwischen zwei "Bergen". Je höher nun das Tiefen-zu-Breiten-Verhältnis ist, desto steiler sind die "Bergflanken" ausgebildet und desto dünner ist eine auf den "Bergflanken" abgeschiedene metallische Schicht ausgebildet. Dieser Effekt ist vergleichbar mit der Ablagerung von Schnee auf schrägen Dächern.

Weiter ist vorgesehen, daß die ersten Schichten und die zweite Schicht zusammen eine Dicke von 10 $\mu$m bis 1000 $\mu$m aufweisen.

In einer weiteren Ausgestaltung ist vorgesehen, daß die ersten Schichten und die zweite Schicht zusammen eine Dicke von 15 $\mu$m bis 50 $\mu$m aufweisen. Kleine Schichtdicken machen den Mehrschichtkörper besonders geeignet zum Einbringen in Fenster von Papierträgern, die auf diese Weise flexibel bleiben.

In einer weiteren vorteilhaften Ausgestaltung ist vorgesehen, daß die zweite Schicht auf der der ersten Schicht abgewandten Seite mit einer oder mehreren transparenten dritten Schichten versehen ist, die auf ihrer der zweiten Schicht abgewandten Oberfläche ein Oberflächenprofil aufweist, das eine Anordnung einer Vielzahl von zweiten Mikrolinsen bildet, und daß die Dicke dieser dritten Schicht oder dieser dritten Schicht und zwischen dieser dritten Schicht und der zweiten Schicht angeordneten ein oder mehreren weiteren dritten Schichten in etwa der Brennweite der zweiten Mikrolinsen entspricht. Die zweiten Linsen sind auf die Rückseite der Mikromuster gerichtet und können deshalb von den Mikromustern ein spiegelbildliches vergrößertes Abbild erzeugen.

Es kann aber auch vorgesehen sein, daß die Mikromuster erste und zweite Mikromuster umfassen, wobei die ersten und die zweiten Mikromuster in Teilrastern angeordnet sind, die einen Raster bilden. Auf diese Weise können die zweiten Mikrolinsen ein vergrößertes Abbild erzeugen, bei dem es sich nicht um ein gespiegeltes von den ersten Mikrolinsen erzeugtes Abbild handelt.

Vorteilhafterweise kann vorgesehen sein, daß der Raster ein 50%/50%-Raster ist.

In einer weiteren Ausgestaltung ist vorgesehen, daß mindestens einige der Mikrolinsen eine unterschiedliche Farbe aufweisen. Wegen des geringen Durchmessers der Mikrolinsen kann vorgesehen sein, daß die eingefärbten Mikrolinsen einen Bereich mit solchen Abmessungen bilden, daß er mit unbewaffnetem Auge wahrnehmbar ist.

Es kann vorgesehen sein, daß die Mikrolinsen ein farbliches Muster bilden.

Ein weiterer interessanter optischer Effekt ist erzielbar, wenn vorgesehen ist, daß einander gegenüberliegend angeordnete Mikrolinsen der ersten und der dritten Schicht komplementär gefärbt ausgebildet sind. Auf diese Weise kann die Transparenz der vergrößerten Mikromuster aufgehoben werden, weil jeweils die beiden gegenüberliegenden Mikrolinsen alle Lichtfarben ausfiltern. Der Effekt kann auch nur für einen Kippwinkelbereich des Mehrschichtkörpers ausgebildet werden.

In einer weiteren nicht beanspruchten Ausgestaltung ist vorgesehen, daß die erste Schicht und/oder die dritte Schicht Mikrolinsen mit mindestens zwei unterschiedlichen Durchmessern aufweisen bzw. aufweist.
Es kann vorgesehen sein, daß Mikrolinsen mit gleichem Durchmesser einen Bereich bilden.
Weiter kann vorgesehen sein, daß der Bereich, den die Mikrolinsen mit gleichem Durchmesser bilden, taktil erfaßbar ist. Die Ergänzung des durch den Mehrschichtkörper hervorgerufenen optischen Effekts durch einen taktilen Effekt ist nicht nur im Hinblick auf die Chancengleichheit für sehbehinderte Personen von Interesse. Auf diese Weise wird auch die Fälschungssicherheit des erfindungsgemäßen Mehrschichtkörpers nochmals erhöht.
Es kann vorgesehen sein, daß Mikrolinsen mit unterschiedlichem Durchmesser eine unterschiedliche Brennweite aufweisen. Wenn es sich bei den Mikrolinsen um Linsen gleicher Ausbildung handelt, z.B. um halbkugelige Linsen, dann sinkt die Brennweite der Mikrolinsen mit sinkendem Durchmesser. In einem solchen Fall sind die Mikrolinsen mit dem kleineren Durchmesser vertieft anzuordnen, damit die weiter oben genannte Bedingung erfüllt ist, daß die Schichtdicke in etwa der Brennweite der Mikrolinse gleich ist. Eine solche vertiefte Anordnung kann die taktile Erfassung erleichtern.
Alternativ kann vorgesehen sein, daß Mikrolinsen mit unterschiedlichem Durchmesser eine gleiche Brennweite aufweisen. Dazu können die Mikrolinsen mit kleinerem Durchmesser als Abschnitte der Mikrolinsen mit größerem Durchmesser ausgebildet sein. Bei einer solchen Ausbildung können die Bereiche taktil erfaßbar und optisch nicht oder kaum erkennbar ausgebildet sein.

Es kann vorgesehen sein, daß die Mikrolinsen als refraktive Linsen ausgebildet sind. Davon wurde in der bisherigen Beschreibung ausgegangen, wobei diese herkömmliche Ausbildung mindestens für den taktilen Effekt von Vorteil ist. Es kann aber auch vorgesehen sein, daß die Mikrolinsen als diffraktive Linsen ausgebildet sind. Die Erzeugung von diffraktiven Linsen großer numerischer Apertur ist allerdings schwierig und wegen der Ausbildung sehr feiner Strukturen mit einem erhöhten Fertigungsaufwand verbunden.

In einer weiteren nicht beanspruchten Ausgestaltung des erfindungsgemäßen Mehrschichtkörpers ist vorgesehen, daß die Mikrolinsen mit einer vierten Schicht bedeckt sind, wobei der Brechzahlunterschied zwischen der vierten Schicht und der Schicht, in die die Mikrolinsen abgeformt sind, > 0,2 ist.
Es kann vorgesehen sein, daß die vierte Schicht eine Schutzschicht ist. Eine solche Schicht kann die Mikrolinsen vor Beschädigung oder vor Verschmutzung schützen.
Weiter kann vorgesehen sein, daß die vierte Schicht eine Kleberschicht ist. Weiter oben wurde bereits ausgeführt, daß es sich bei dem Mehrschichtkörper um die Übertragungslage einer Transferfolie handeln kann. Die Kleberschicht kann auch auf der Außenseite der zweiten Schicht angeordnet sein. Es kann auch vorgesehen sein, daß die Mikrolinsen durch die Schutzschicht bedeckt sind und auf der Außenseite der zweiten Schicht die Kleberschicht aufgebracht ist. Eine solche Anordnung kann für die weiter oben beschriebene Verwendung des Mehrschichtkörpers als Lichtschutz bevorzugt sein.

Was die Ausbildung der zweiten Schicht betrifft, können zahlreiche Ausführungen vorgesehen sein.

Es kann vorgesehen sein, daß die zweite Schicht eine metallische Schicht ist oder daß die zweite Schicht eine hochbrechende dielektrische Schicht ist oder daß die zweite Schicht eine Farbpigmentschicht ist oder daß die zweite Schicht eine Dünnfilmschicht ist oder daß die zweite Schicht eine eingefärbte Photoresistschicht ist oder daß die zweite Schicht eine eingefärbte Lackschicht ist oder daß die zweite Schicht eine dünne rußeingefärbte Schicht ist. Diese beispielhafte Aufzählung kann erweitert werden, ohne den Bereich der Erfindung zu verlassen, sofern es sich um Schichten handelt, welche die Ausbildung der Mikromuster zulassen. So kann es sich beispielsweise bei der zweiten Schicht auch um die den Mikrolinsen abgewandte Oberfläche der ersten Schicht handeln, in die beispielsweise die Mikromuster als Mattstrukturen eingebracht sind. Es kommt also nur darauf an, in die Brennebene der Mikrolinsen Mikromuster zu bringen, die aus opaken und aus transparenten Bereichen gebildet sind.

Die vorstehend genannten Ausbildungen der zweiten Schicht ermöglichen die Ausbildung zahlreicher optischer Effekte, welche das Erscheinungsbild der vergrößerten Abbildungen der Mikromuster und/oder des Graustufenbildes beeinflussen können. Es kann sich dabei auch um optische Effekte handeln, die im sichtbaren Licht nicht auftreten oder die darauf beruhen, daß die zweite Schicht unsichtbare Strahlung, beispielsweise UV-Licht in sichtbares Licht zu wandeln vermag. Dazu sind insbesondere spezielle Farbpigmente geeignet.

Es ist ein Wertgegenstand, beispielsweise Kreditkarte, Banknote oder Ausweis, mit einem in einem Fenster angeordneten Mehrschichtkörper der vorstehend beschriebenen Art vorgesehen.

Weiter ist ein transparenter Körper, insbesondere Glasscheibe, beschichtet mit einem Mehrschichtkörper der vorstehend beschriebenen Art, vorgesehen.

Die Verwendung des erfindungsgemäßen Mehrschichtkörpers ist jedoch nicht auf diese beiden Anwendungen beschränkt. Neben technischen Anwendungen als richtungsabhängiges Licht- bzw. Strahlenschutz-Filter kann der erfindungsgemäße Mehrschichtkörper beispielsweise zu Dekorationszwecken oder für Effektleuchten Verwendung finden.

Im folgenden wird die Erfindung anhand von mehreren Ausführungsbeispielen unter Zuhilfenahme der beiliegenden Zeichnungen beispielhaft verdeutlicht.

Es zeigen:

Fig. 1        eine schematische Schnittdarstellung eines ersten Ausführungsbeispiels des erfindungsgemäßen Mehrschichtkörpers;

Fig. 2a        eine schematische Schnittdarstellung eines ersten Anordnungsbeispiels des Mehrschichtkörpers in Fig. 1;

Fig. 2b        eine schematische Schnittdarstellung eines zweiten Anordnungsbeispiels des Mehrschichtkörpers in Fig. 1;

Fig. 2c        eine schematische Schnittdarstellung eines dritten Anordnungsbeispiels des Mehrschichtkörpers in Fig. 1;

Fig. 3a        die Vorderansicht einer ersten Fensterbanknote mit dem Mehrschichtkörper aus Fig. 1 in schematischer Darstellung;

Fig. 3b        die Rückansicht der Fensterbanknote in Fig. 3a;

Fig. 4a        eine erste Ausführungsvariante einer Mikrobildschicht des Mehrschichtkörpers in Fig. 1;

Fig. 4b        eine zweite Ausführungsvariante einer Mikrobildschicht des Mehrschichtkörpers in Fig. 1;

Fig. 4c        eine dritte Ausführungsvariante einer Mikrobildschicht des Mehrschichtkörpers in Fig. 1;

Fig. 5        eine schematische Schnittdarstellung eines zweiten Ausführungsbeispiels des erfindungsgemäßen Mehrschichtkörpers;

Fig. 6a bis 6c        Darstellungen zur Erläuterung des Funktionsprinzips des Mehrschichtkörpers in Fig. 1;

Fig. 7        die Vorderansicht einer zweiten Fensterbanknote mit Mikrobildschicht in Fig. 6a bis 6c;

Fig. 8        eine schematische Darstellung eines dritten Ausführungsbeispiels des erfindungsgemäßen Mehrschichtkörpers;

Fig. 9        eine schematische Schnittdarstellung eines vierten Ausführungsbeispiels des erfindungsgemäßen Mehrschichtkörpers;

Fig. 10        eine Draufsicht eines fünften Ausführungsbeispiels eines erfindungsgemäßen Mehrschichtkörpers in schematischer Darstellung;

Fig. 11a,11b        schematische Schnittdarstellungen eines sechsten Ausführungsbeispiels des erfindungsgemäßen Mehrschichtkörpers.

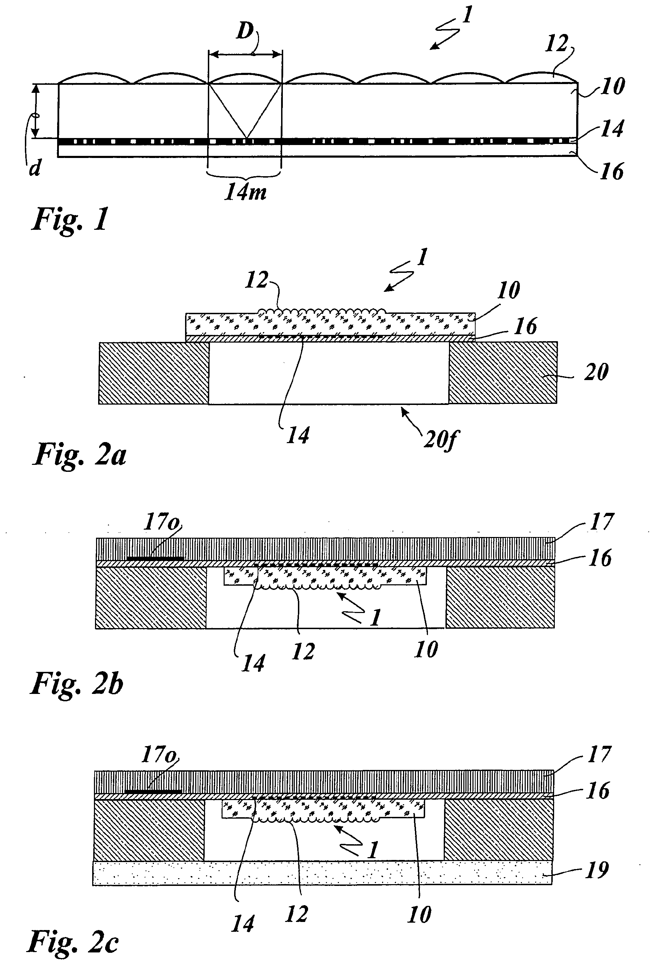

Fig. 1 zeigt einen als Folie ausgebildeten Mehrschichtkörper 1, der eine Trägerschicht 10 aufweist, in deren Oberseite Mikrolinsen 12 abgeformt sind. Bei den Mikrolinsen 12 handelt es sich um spärische Linsen, die in einer regelmäßigen zweidimensionalen Anordnung auf der Oberseite der Trägerschicht 10 verteilt sind. Wie in dem in Fig. 1 dargestellten Ausführungsbeispiel zu erkennen, sind die Mikrolinsen 12 in dichter Packung angeordnet, d.h. benachbarte Mikrolinsen berühren einander oder weisen einen gegenüber ihrem Durchmesser vernachlässigbaren Abstand auf. Bei Durchmessern von einigen 10 $\mu$m ist dann allerdings der Abstand, der in der Größenordnung von einigen $\mu$m liegt, nicht mehr vernachlässigbar.

Der Durchmesser D der Mikrolinsen 12 ist im Bereich von 10 $\mu$m bis 50 $\mu$m gewählt.
Die Unterseite der Trägerschicht 10 ist mit einer bereichsweise entfernten metallischen Schicht 14 versehen, die von einer Kleberschicht 16 bedeckt ist. In die metallische Schicht 14 sind Mikromuster 14m abgeformt, wobei jedem Mikromuster 14m eine Mikrolinse zugeordnet ist. Die Mikromuster 14m sind aus Bereichen, in denen die metallische Schicht 14 erhalten ist, und aus Bereichen, in denen die metallische Schicht entfernt ist, gebildet. Die mit der metallischen Schicht versehenen Bereiche erscheinen als opake Teilbereiche, und die Bereiche, in denen die metallische Schicht entfernt ist, erscheinen als transparente Teilbereiche. Die transparenten Teilbereiche bilden eine bildliche Darstellung, beispielsweise eine geometrische Figur und/oder ein oder mehrere alphanumerische Zeichen und oder ein Logo und/oder einen Teilbereich eines Hologramms oder eines KINEGRAM®. Die opaken Teilbereiche bilden einen Hintergrund, von dem sich die bildliche Darstellung abhebt. Der Flächenanteil der opaken ersten Teilbereiche zur Gesamtfläche der ersten und zweiten Teilbereiche kann zwischen 20% bis 60% sein.

Es ist vorgesehen, daß das von der Mikrolinse 12 entworfene vergrößerte Abbild des Mikromusters bzw. des abgebildeten Teilbereichs des Mikromusters im Unendlichen liegt, d.h. von einem nicht akkommodierten Auge betrachtet werden kann. Dazu muß sich das Mikromuster 14m in der Brennebene der Mikrolinse 12 befinden. Deshalb ist die Dicke d der Trägerschicht 10 so gewählt, daß sie annähernd gleich der Brennweite der Mikrolinse 12 ist.

Für eine Linse, bei der die Bildweite unendlich ist, besteht folgender Zusammenhang zwischen Brennweite f, Brechzahl n und Krümmungsradius r:

$$f = r / (n - 1)$$

Durch Variation des Krümmungsradius r der Mikrolinse 12 und der Brechzahl n der Trägerschicht 10 ist dem Entwickler des vorstehend beschriebenen Mehrschichtkörpers 1 die Möglichkeit gegeben, die Abmessungen der Mikrolinsen an die gegebenen Einsatzbedingungen gut anzupassen.

Die optisch wirksame Dicke d der Trägerschicht 10, gemessen von der Planseite der Mikrolinsen bis zur Unterseite der Trägerfolie 10 (siehe Fig. 1), kann im Bereich von 10 μm bis 1000 μm liegen. Für Fensterbanknoten o.ä. kann ein Bereich von 15 μm bis 50 μm bevorzugt sein. Je nach Ausbildung der Mikrolinsen kann die Gesamtdicke der Trägerschicht um den Betrag der Linsendicke größer sein als die optisch wirksame Dicke d.

Die Trägerschicht 10 kann aus einer PET-Folie, PEN-Folie o.ä. oder einem ähnlichen thermoplastischen Kunststoff gebildet sein, in das die Mikrolinsen durch thermisches Formen eingeprägt sind. Es kann sich aber auch um eine PET-Folie handeln, die mit einem UV-härtbaren Lack beschichtet ist oder um eine UV-härtbare Lackschicht handeln, die nach dem Ausformen gehärtet ist.

Eine besonders einfache Ausrichtung der Mikromuster 14m im Register kann erreicht werden, wenn die metallische Schicht 14 in einer solchen Stärke ausgebildet wird, daß eine auf die metallische Schicht 14 aufgebrachte Photoresistschicht durch die metallische Schicht hindurch belichtet werden kann, wobei die Abbildung der Mikromuster 14m durch die Mikrolinsen 12 hindurch erfolgt.

Es kann aber auch vorgesehen sein, daß die Trägerschicht 10 auf ihrer Unterseite mit einer Oberflächenstruktur versehen ist, die in Abhängigkeit vom Tiefen-zu-Breiten-Verhältnis der Oberflächenstruktur in der danach durch Sputtern oder dergleichen aufgebrachten metallischen Schicht 14 Bereiche mit unterschiedlicher Transparenz, d.h. mit unterschiedlicher Dicke ausbildet. Auf diese Weise kann die metallische Schicht 14 zugleich als Belichtungsmaske für den Photoresist verwendet werden.

Das dimensionslose Tiefen-zu-Breiten-Verhältnis, häufig auch als Aspektrate bezeichnet, ist ein kennzeichnendes Merkmal für die Oberflächenvergrößerung vorzugsweise periodischer Strukturen. Eine solche Struktur bildet in periodischer Abfolge "Berge" und "Täler" aus. Als Tiefe ist hier der Abstand zwischen "Berg" und "Tal" bezeichnet, als Breite der Abstand zwischen zwei "Bergen". Je höher nun das Tiefen-zu-Breiten-Verhältnis ist, desto steiler sind die "Bergflanken" ausgebildet und desto dünner ist eine auf den "Bergflanken" abgeschiedene metallische Schicht ausgebildet. Dieser Effekt ist auch zu beobachten, wenn es sich um diskret verteilte "Täler" handelt, die in einem Abstand zueinander angeordnet sein können, der um ein Vielfaches größer als die Tiefe der "Täler" ist. In einem solchen Fall ist die Tiefe des "Tales" zur Breite des "Tales" ins Verhältnis zu setzen, um durch Angabe des Tiefen-zu-Breiten-Verhältnisses die Geometrie des "Tales" zutreffend zu beschreiben.

Es ist also möglich, mit Hilfe des Tiefen-zu-Breiten-Verhältnisses die effektive Dicke der metallischen Schicht einzustellen.

Die Fig. 2a bis 2c zeigen nun Beispiele für die Anordnung des Mehrschichtkörpers 1 auf einem mit einem Fenster 20f ausgebildeten Träger 20, bei dem es sich beispielsweise um eine Fensterbanknote handeln kann.

Fig. 2a zeigt ein erstes Anordnungsbeispiel, bei dem der Mehrschichtkörper 1 mit Hilfe der Kleberschicht 16 auf das Fenster 20f aufgebracht ist. Es handelt sich bei den Fig. 2a bis 2c um schematische Darstellungen. Es ist beispielsweise möglich, daß der aus Papier bestehende Träger 20 bei dem Aufbringen des Mehrschichtkörpers 1 im Bereich des Fensters 20f soweit zusammengepreßt wird, daß die Oberfläche der Trägerschicht 10 bündig mit der Oberfläche des Trägers 10 angeordnet ist.

Die Fig. 2b zeigt ein zweites Anordnungsbeispiel, bei dem der Mehrschichtkörper 1 in dem Fenster 20f angeordnet ist, wobei die Mikrolinsen 12 zur Rückseite des Trägers 20 weisen. Die Kleberschicht 16 übergreift das Fenster 20f, wobei die Rückseite der Trägerschicht 10 mit der Vorderseite des Trägers 20 fluchtet. Die Mikrolinsen 12 des Mehrschichtkörpers 1 weisen deshalb zur Rückseite des Trägers 20. Die Kleberschicht 16 ist auf ihrer Rückseite von einer ersten Schutzschicht 17 bedeckt, wobei in dem in Fig. 2b dargestellten Ausführungsbeispiel in einem neben dem Fenster 20f angeordneten Bereich eine optisch aktive Schicht 17o zwischen der Schutzschicht 17 und der Kleberschicht 16 ausgebildet ist, bei der es sich beispielsweise um ein Hologramm oder ein KINEGRAM® handeln kann.

Fig. 2c zeigt nun ein drittes Anordnungsbeispiel, bei dem der Mehrschichtkörper 1 vollständig gekapselt ist, indem die Rückseite des Fensters 20f von einer zweiten Schutzschicht 19 überdeckt ist. Es kann sich dabei um einen thermoplastischen Kleber handeln, es kann aber auch zwischen der Schutzschicht 19 und der Rückseite des Trägers 20 eine Kleberschicht vorgesehen sein. Der vollständig gekapselte Mehrschichtkörper 1 ist besonders gut gegen Beschädigung und/oder Verschmutzung geschützt und kann deshalb bevorzugt für Fensterbanknoten vorgesehen sein.

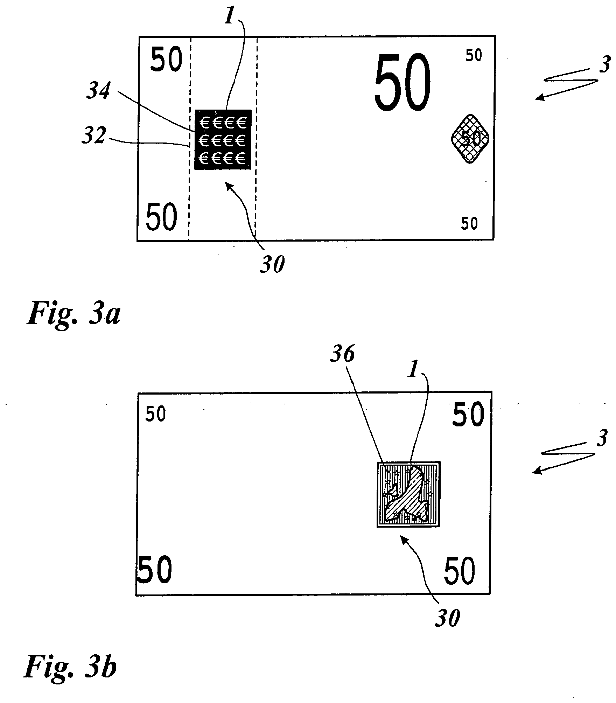

Die Figuren 3a und 3b zeigen nun ein Anwendungsbeispiel für die Verwendung des Mehrschichtkörpers 1 in Fig. 1.

Eine Banknote 3 weist ein Fenster 30 auf, in das der Mehrschichtkörper 1 eingebracht ist. Es kann auch vorgesehen sein, daß die Banknote mehrere Fenster aufweist. Der Mehrschichtkörper 1 kann beispielsweise ein Abschnitt eines Folienstreifens 32 sein, dessen Ränder in Fig. 3a durch unterbrochene Strichlinien angedeutet sind, wobei der Folienstreifen 32 so positioniert ist, daß der Mehrschichtkörper 1 das Fenster 300 der Banknote 3 vollständig ausfüllt.

In dem in Fig. 3a und 3b dargestellten Beispiel sind die Mikromuster so ausgeführt, daß eine Anzahl von Euro-Währungssymbolen 34 bei Betrachtung der Vorderseite der Banknote 3 sichtbar ist. Die Euro-Währungssymbole 34 scheinen für einen Betrachter über, unter oder in der Oberfläche der Banknote zu schweben und verändern bei Änderung des Blickwinkels ihre Lage relativ zur Oberfläche der Banknote 3. Die Euro-Währungssymbole 34 erscheinen dem Auge des Betrachters transparent (Fig. 3a), ein Effekt, der im Widerspruch dazu steht, wenn das Fenster von der Rückseite der Banknote her betrachtet wird (Fig. 3b).

Bei der Betrachtung der Rückseite der Banknote 3 (Fig. 3b) erblickt der Betrachter im Fenster 30 der Banknote 3 ein Graustufenbild 36, das aus den für das unbewaffnete menschliche Auge nicht auflösbaren Mikromustern 14m gebildet ist. Es kann aber auch vorgesehen sein, daß die Bildpunkte des Graustufenbilds 36 aus zwei verschiedenen Mikromustern 14m gebildet sind, die in einem Raster angeordnet sind, beispielsweise in einem 50%/50%-Raster. Für den Betrachter der Banknote 3 ruft der in dem Fenster 30 der Banknote 3 angeordnete Mehrschichtkörper 1 einen interessanten optischen Effekt hervor, der leicht einprägbar ist und gleichsam auf den ersten Blick die Unterscheidung einer echten Banknote von einer kopierten Banknote ermöglicht.

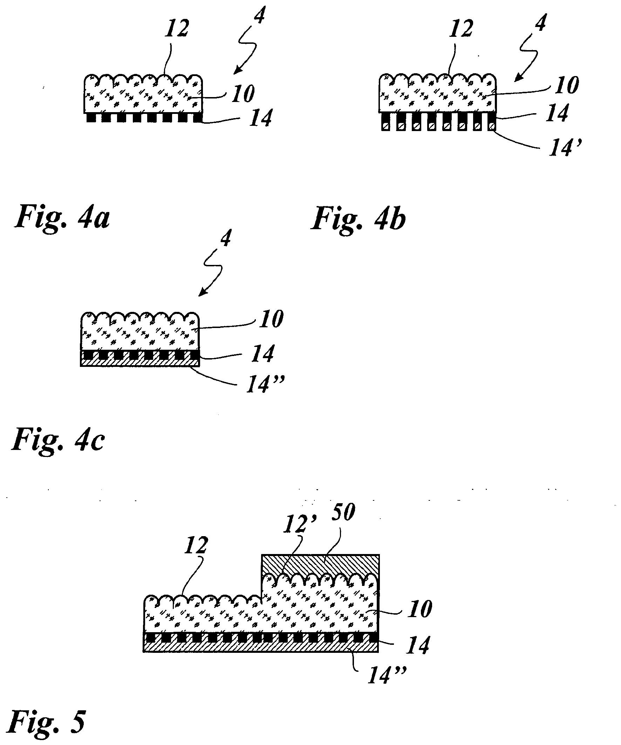

Die Fig. 4a bis 4c zeigen nun Ausführungsvarianten der als Mikrobildschicht ausgebildeten metallischen Schicht 14.

Fig. 4a zeigt einen Mehrschichtkörper 4, der aus der Trägerschicht 10, die auf ihrer Vorderseite die Mikrolinsen 12 aufweist und aus der metallischen Schicht 14 gebildet ist, die auf die Rückseite der Trägerschicht 10 aufgebracht ist. Die Schicht 14 kann beispielsweise aus Gold ausgebildet sein. Sowohl die von der Vorderseite sichtbaren Mikromuster als auch das von der Rückseite sichtbare Graustufenbild erscheinen goldfarben.

Fig. 4b zeigt nun einen Mehrschichtkörper 4', bei dem auf die metallische Schicht 14 eine weitere metallische Schicht 14' aufgebracht ist, wobei beide Schichten gleich strukturiert sind. Auf diese Weise ist jeder Bereich eines Mikromusters aus zwei übereinander angeordneten Schichten 14 und 14' ausgebildet. Bei der zweiten Schicht kann es sich beispielsweise um Silber handeln. Die von der Vorderseite sichtbaren Mikromuster erscheinen in einem goldenen Umfeld, das von der Rückseite sichtbare Graustufenbild silbern.

Fig. 4c zeigt einen Mehrschichtkörper 4", bei dem die Schicht 14 mit einer Schicht 14" bedeckt ist, die auch die Bereiche ausfüllt, in denen die Schicht 14 partiell entfernt ist. Bei der Schicht 14" kann es sich um eine metallische Schicht handeln, es kann aber auch vorgesehen sein, die Schicht 14" als Farbschicht auszubilden und aufzudrucken. Es kann auch vorgesehen sein, die Schicht 14" als in einem Spektralbereich transparente Schicht auszubilden, so daß weitere interessante optische Effekte erzielbar sind.

Die Fig. 5 zeigt nun einen Mehrschichtkörper 5, der wie der Mehrschichtkörper 4" aufgebaut ist, wobei jedoch ein Abschnitt der Trägerschicht 10 mit einer Schutzschicht 50 überdeckt ist. In diesem Abschnitt weist die Trägerschicht 14" auf, die sich in ihrer Brennweite von den Mikrolinsen 12 unterscheiden können. Die Schutzschicht 50 und die Trägerschicht 10 unterscheiden sich in ihren Brechungsindizes, so daß die Wirkung der Mikrolinsen 12 erhalten bleibt. Es ist jedoch zu beachten, daß in dem von der Schutzschicht überdeckten Abschnitt die Dicke der Trägerschicht so angepaßt werden muß, daß die Schicht 14 wieder in der Brennebene der Mikrolinsen 12' angeordnet ist.

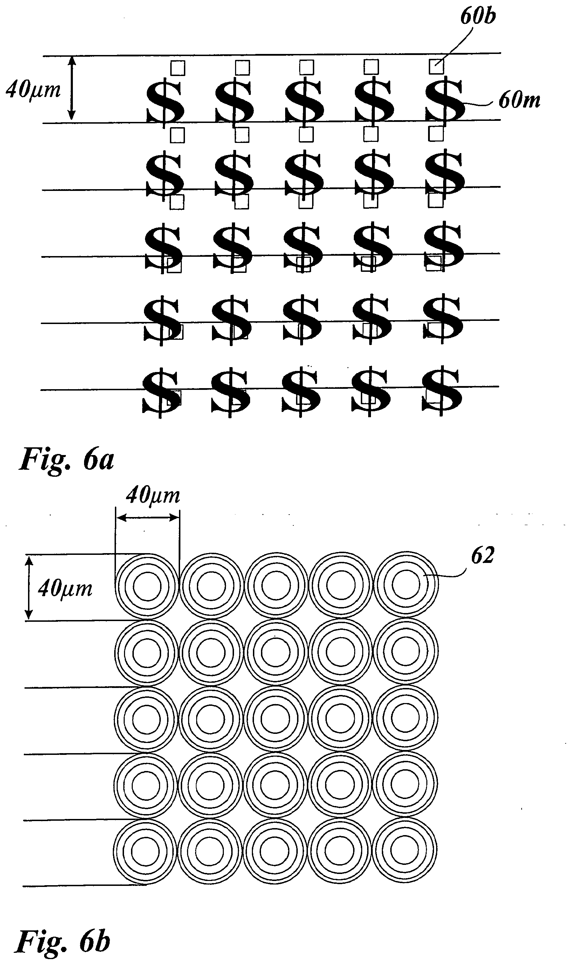

Die Fig. 6a bis 6c zeigen die Wirkung der einzelnen Schichten eines erfindungsgemäßen Mehrschichtkörpers 6.

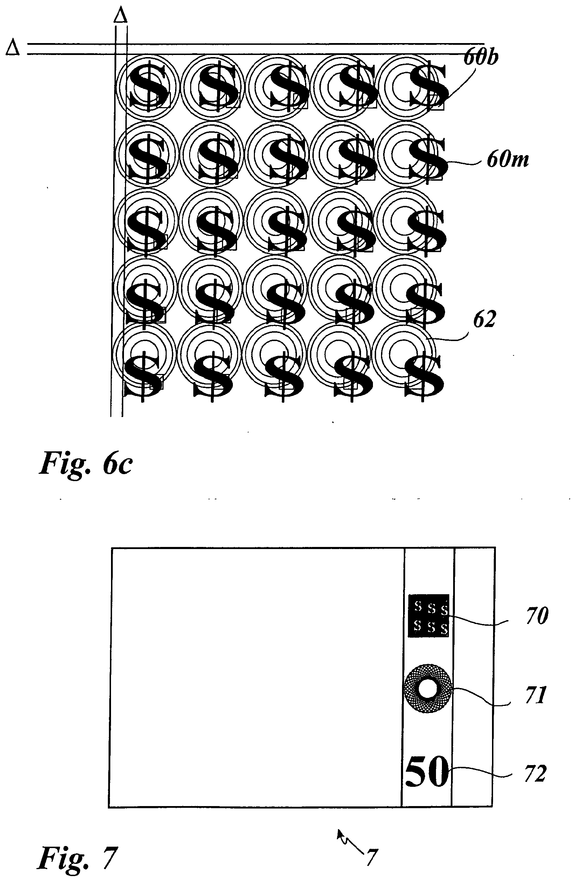

Fig. 6a zeigt Mikromuster 60m, die in einem quadratischen Raster mit der Rasterweite 40 μm angeordnet sind. Die Mikromuster 60m weisen als bildliche Darstellung ein transparentes Dollar-Symbol auf, das der einfacheren Darstellung wegen in Fig. 6a und 6c geschwärzt dargestellt ist. Von Mikrolinsen 62 in Fig. 6b erfaßte Bildbereiche 60b sind so angeordnet, daß sie jeweils unterschiedliche Bereiche der Mikromuster 60m umfassen.

Die in Fig. 6b dargestellten Mikrolinsen 62 sind in einem quadratischen Raster mit der Rasterweite 40 μm angeordnet. Wie in Fig. 6c zu erkennen, sind beide Raster um einen Betrag Δ gegeneinander versetzt. Es können unterschiedliche optische Effekte in Abhängigkeit davon generiert werden, ob der MikromusterRaster größer ist als der Mikrolinsen-Raster ($\Delta > 0$) oder der Mikromuster-Raster kleiner als der Mikrolinsen-Raster ausgebildet ist ($\Delta < 0$). Es ist aber auch möglich, daß $\Delta = 0$ ist, aber beide Raster gegeneinander verdreht sind. Weiter kann die Ausrichtung der Mikromuster unterschiedlich vorgesehen sein. Die Mikromuster können die gleiche Orientierung aufweisen wie die vergrößerten Abbildungen, d.h. parallel zu diesen ausgerichtet sein; sie können kopfstehend, d.h. antiparallel zueinander ausgerichtet sein und sie können unter einem Winkel zueinander angeordnet sein, wobei ein Winkel von etwa 90° bevorzugt ist. Fig. 7 zeigt die Vorderansicht einer zweiten Fensterbanknote 7, wobei in dem Fenster 70 der Banknote 7 der Mehrschichtkörper 6 in Fig. 6a bis 6c angeordnet ist. Die Fensterbanknote 7 weist weiter ein KINEGRAM® (71) sowie eine geprägte Wertangabe (72) auf.

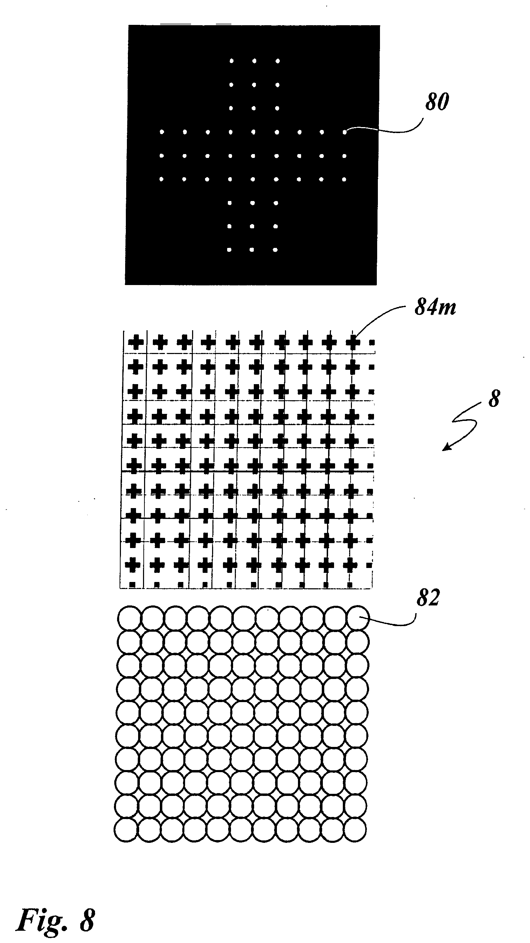

Fig. 8 zeigt Schichten eines nicht beanspruchten Mehrschichtkörpers 8, bei dem Mikrolöcher 80 ein Muster bilden, das kongruent ist zu Mikromustern 84m. Mit der Abbildung der Mikromuster 84m wird zwar eine größere Tiefenschärfe erreicht, doch sinkt die Lichtstärke der Abbildung. Deshalb ist eine Schicht mit Mikrolinsen 82 vorgesehen, welch das durch die Mikrolöcher 80 fallende Licht bündeln.

Mikrolinsen 82 und Mikrolöcher 80 sind 1:1 einander zugeordnet und befinden sich exakt zueinander im Register. In dem dargestellten Ausführungsbeispiel bilden die Mikrolöcher 80 ein "Schweizer Kreuz" mit den Abmessungen 10 mm x 10 mm. In den gleichen Abmessungen 10 mm x 10 mm ist das Mikrolinsen-Feld ausgebildet. Der Effekt des Mikroloch-Feldes besteht darin, daß es exakt erblickt wird, wenn das durch die Mikrolinsen gebündelte Licht durch die Mikrolöcher 80 in das Gesichtsfeld projiziert wird.

Es ist möglich, nebeneinander Mikroloch-Felder im Register anzuordnen, die durch das Mikrolinsen-Feld beispielsweise mit Laserlicht unter zwei Winkeln beleuchtet werden. Auf diese Weise kann sehr einfach durch einen Komplex von Mikroloch-Feldern ein dreidimensionales Bild eines Objektes erzeugt werden.

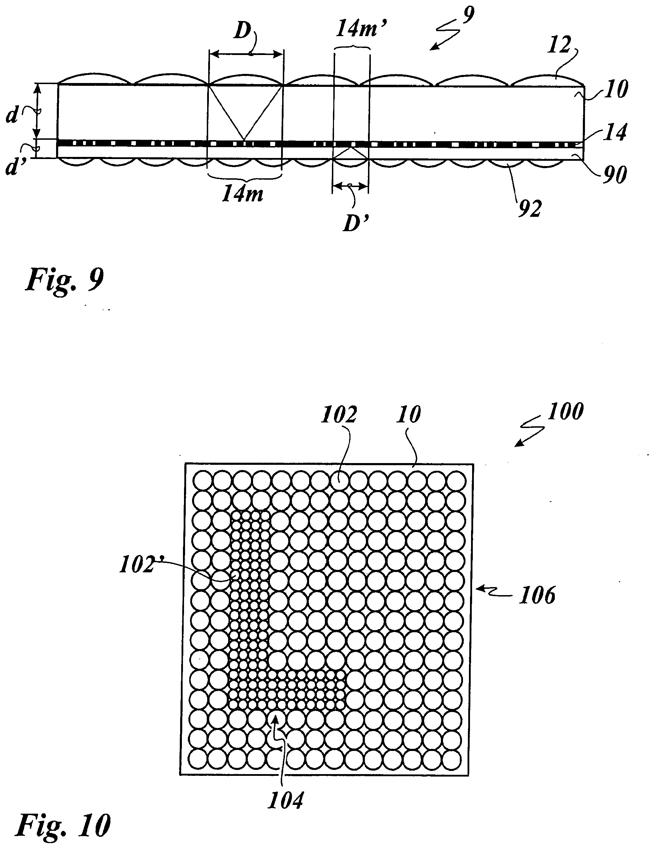

Fig. 9 zeigt nun einen Mehrschichtkörper 9, der sich von dem in Fig. 1 dargestellten Mehrschichtkörper dadurch unterscheidet, daß auch auf der Rückseite des Mehrschichtkörpers Mikrolinsen angeordnet sind.

In dem in Fig. 9 dargestellten Ausführungsbeispiel ist auf der von der Trägerschicht 10 abgewandten Seite der metallischen Schicht 14 eine Mikrolinsenschicht 90 angeordnet, in die auf der Außenseite Mikrolinsen 92 abgeformt sind. Bei den Mikrolinsen 92 handelt es sich um sphärische oder asphärische Linsen, die in einer regelmäßigen zweidimensionalen Anordnung auf der Außenseite der Mikrolinsenschicht 90 verteilt sind. Wie in dem in Fig. 9 dargestellten Ausführungsbeispiel zu erkennen, sind die Mikrolinsen 92 in dichter Packung angeordnet, d.h. benachbarte Mikrolinsen berühren einander oder weisen einen gegenüber ihrem Durchmesser vernachlässigbaren Abstand auf, sofern ihr Durchmesser groß ist im Vergleich zu dem üblichen Abstand von einigen μm. Die Mikrolinsen 92 weisen einen Durchmesser D' auf, der kleiner als der Durchmesser D der auf der Trägerschicht 10 ausgebildeten Mikrolinsen 12 ist. Auch die Brennweite der Mikrolinsen 92 ist kleiner als die Brennweite der Mikrolinsen 12, weshalb auch die Dicke d' der Mikrolinsenschicht 90 kleiner als die Dicke der Trägerschicht 10 ist.

Auf Grund der unterschiedlichen Parameter der Mikrolinsen 12 und 92, insbesondere der Brennweite und des Durchmessers, ist ein unterschiedlicher visueller Eindruck durch die Trägerschicht 10 bzw. die Mikrolinsenschicht 90 ausgebildet. Ein Betrachter erblickt nun transparent erscheinende unterschiedlich vergrößerte Abbilder von unterschiedlichen Bereichen der metallischen Schicht 14, die in unterschiedlicher Höhe über dem Mehrschichtkörper zu schweben scheinen und die bei Änderung des Betrachtungswinkels ihre Lage ändern. Dieser Effekt ergibt sich nicht direkt durch die Brennweiten der Mikrolinsen, sondern durch die unterschiedlichen Rasterweiten der Mikrobilder und Mikrolinsen. In dem in Fig. 9 dargestellten Ausführungsbeispiel handelt es sich um unterschiedliche Mikromuster 14m und 14m', die jeweils zu den Mikrolinsen 12 bzw. 92 zugeordnet sind. Die Mikromuster 14m und 14m' sind in einem 50%/50%-Raster angeordnet.

Fig. 10 zeigt in der Draufsicht einen nicht beanspruchten Mehrschichtkörper 100, dessen Schichtaufbau dem des Mehrschichtkörpers 1 in Fig. 1 entspricht. In die äußere Oberfläche der Trägerschicht 10 sind Mikrolinsen 102 und 102' unterschiedlichen Durchmessers abgeformt. Die Mikrolinsen 102' haben einen kleineren Durchmesser als die Mikrolinsen 102. Hierbei ist der Durchmesser der Mikrolinsen 102 doppelt so groß wie der Durchmesser der Mikrolinsen 102'. Die Mikrolinsen 102' bilden einen zusammenhängenden Musterbereich 104 in L-Form, die Mikrolinsen 102 bilden einen rechteckförmigen Hintergrundbereich 106.

Allein auf Grund der unterschiedlichen Ausbildung der Mikrolinsen 102 und 102' bilden beide Mikrolinsen-Bereiche einen unterschiedlichen optischen Eindruck aus, beispielsweise die Illusion von in unterschiedlicher Höhe schwebender Bildinformationen. Es kann auch vorgesehen sein, daß die Bereiche unterschiedlich gefärbten Mikromustern zugeordnet sind, wobei die Färbung durch Farbpigmente und/oder durch Materialfärbung und/oder durch physikalische Effekte, wie sie beispielsweise an Dünnschichtsystemen zu beobachten sind, hervorgerufen sein kann.

Es kann vorgesehen sein, daß die Mikrolinsen 102 und 102' die gleiche Brennweite haben. In diesem Fall ist die Dicke d der Trägerschicht 10 konstant und die Scheitel der Mikrolinsen 102' liegen auf einem niedrigerem Niveau als die Scheitel der Mikrolinsen 102, wobei die Mikrolinsen 102 und 102' mit ähnlichem Krümmungsradius ausgebildet sind. Bei den Mikrolinsen 102 kann es sich beispielsweise um Kugelkalotten handeln, deren Planfläche durch einen Großkreis begrenzt ist und bei den Mikrolinsen 102' kann es sich um Kugelkalotten handeln, deren Planfläche durch einen Kleinkreis begrenzt ist, wobei die Mikrolinsen 102' folglich eine geringere Dicke als die Mikrolinsen 102 haben.

Es kann aber auch vorgesehen sein, die Mikrolinsen 102 und 102' mit unterschiedlichem Krümmungsradius auszubilden, so daß die Brennweiten beider Mikrolinsen unterschiedlich sind. In diesem Fall ist vorgesehen, daß die Dicke d der Trägerschicht 10 in den o.g. beiden Bereichen unterschiedlich ausgebildet ist, so daß sowohl in dem Hintergrundbereich 106, der von den Mikrolinsen 102 bedeckt ist, als auch in dem Musterbereich 104, der von den Mikrolinsen 102' bedeckt ist, die in der metallischen Schicht 14 (in Fig. 10 nicht dargestellt) ausgebildeten Mikromuster jeweils in der Brennpunktsebene der Mikrolinsen 102, 102' angeordnet sind.

In dem in Fig. 10 dargestellten Mehrschichtkörper 100 ist der durch die Mikrolinsen 102' gebildete L-förmige Bereich auch taktil erfaßbar. Eine solche Eigenschaft erschwert die Nachahmung beträchtlich und ermöglicht darüber hinaus sehbehinderten Menschen die Echtheitsprüfung.

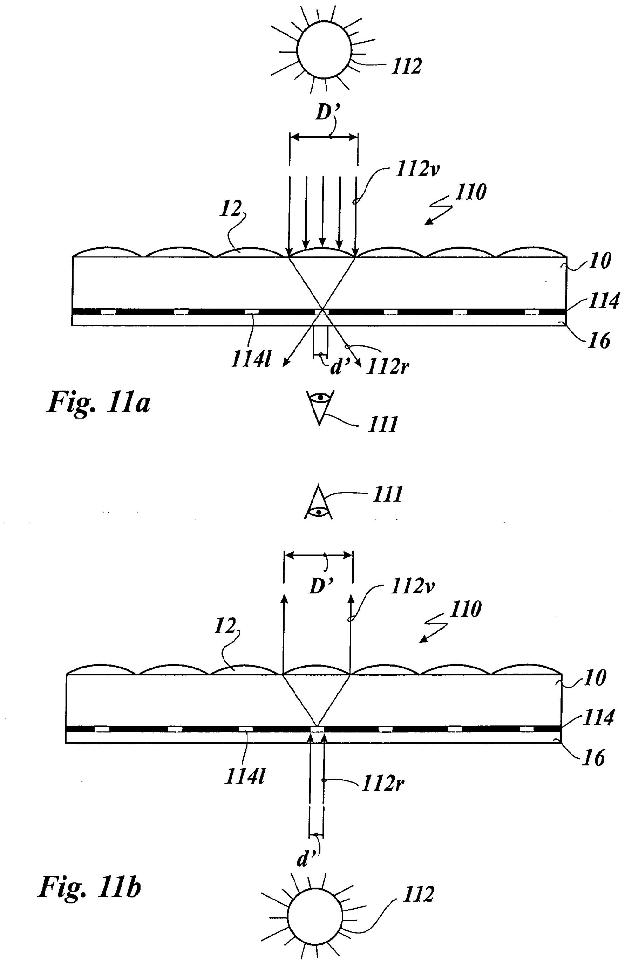

Die Fig. 11a und 11b zeigen nun einen nicht beanspruchten Mehrschichtkörper, 110, der im wesentlichen wie der weiter oben in Fig. 1 dargestellte Mehrschichtkörper 1 ausgebildet ist, wobei jedoch anstelle der bereichsweise entfernten metallischen Schicht 14 eine mit Mikrolöchern 114l versehene metallische Schicht 114 vorgesehen ist. Die Mikrolöcher 114l sind im Brennpunkt der Mikrolinsen 12 angeordnet. Der Mehrschichtkörper 110 ist in Fig. 11a von der Vorderseite her von einer Lichtquelle 112 beleuchtet. Auf die Rückseite des Mehrschichtkörpers 110 blickt ein durch ein Auge symbolisierter Betrachter 111. Fig. 11b zeigt den Mehrschichtkörper 110 bei Beleuchtung von der Rückseite; der Betrachter 111 blickt nun auf die Vorderseite des Mehrschichtkörpers 110.

In Fig. 11a sammeln die Mikrolinsen 12 von der Vorderseite des Mehrschichtkörpers 110 einfallende Lichtstrahlen eines von der Lichtquelle 112 ausgehenden Strahlenbündels 112v mit dem Durchmesser D' und konzentrieren sie auf die Mikrolöcher 114l. Die Mikrolöcher 114l, die einen Durchmesser d' < D' haben, werden durch die hinter ihnen auffächernden Strahlenbündel 112v scheinbar vergrößert, so daß die Gesamtheit der Mikrolöcher 114l bei dem Betrachter 111 den optischen Eindruck einer leuchtenden transparenten Fläche hervorruft.

In Fig. 11b treten von der Rückseite des Mehrschichtkörpers 110 durch die Mikrolöcher 114l Strahlenbündel 112r mit dem Durchmesser d' hindurch und weisen infolge der optischen Wirkung der Mikrolinsen 12 auf der Vorderseite des Mehrschichtkörpers 110 den Durchmesser D' > d' auf. Durch die Vergrößerung der Strahlenbündel 112r sinkt deren Leuchtdichte ab, so daß der Mehrschichtkörper für den Betrachter 111, der auf seine Vorderseite blickt, als lichtabschirmendes Filter erscheint.

Bei dem Mehrschichtkörper 110 handelt es sich also um ein richtungsabhängiges Filter, das beispielsweise als Blickschutz auf Fensterscheiben aufgebracht werden kann.

**Patentansprüche**

1. Mehrschichtkörper zur Betrachtung von Vorder- und Rückseite im Durchlicht und/oder Auflicht, wobei der Mehrschichtkörper (1, 3, 4, 5) eine oder mehrere transparente erste Schichten (10) und eine zweite Schicht (14, 54) aufweist, die eine Vielzahl von Mikromustern aus einem oder mehreren opaken ersten Teilbereichen und einem oder mehreren transparenten zweiten Teilbereichen aufweist, wobei die zweite Schicht eine eingefärbte Photoresistschicht aufweist oder wobei die zweite Schicht (14, 54) in den opaken ersten Teilbereichen und in den transparenten zweiten Teilbereichen eine Oberflächenstruktur mit unterschiedlichem Tiefen-zu-Breiten-Verhältnis aufweist, wobei im Bereich der zweiten Teilbereiche der Mehrschichtkörper durchgehend transparent ausgebildet ist, wobei eine der ersten Schichten (10) auf ihrer der zweiten Schicht (14, 54) abgewandten Oberfläche ein Oberflächenprofil aufweist, das eine Anordnung einer Vielzahl von ersten Mikrolinsen (12) bildet, wobei die Mikrolinsen (12) einen Durchmesser kleiner als 50 μm aufweisen und durch die Mikrolinsen (12) jeweils ein Bildpunkt des Mikromusters pro Mikrolinse selektiert wird, und wobei die Dicke dieser ersten Schicht (10) oder dieser ersten Schicht (10) und zwischen dieser ersten Schicht (10) und der zweiten Schicht (14, 54) angeordneten ein oder mehreren weiteren ersten Schichten (10) in etwa der Brennweite der ersten Mikrolinsen (12) entspricht, wobei die Mikromuster Bildpunkte eines Graustufenbildes bilden und die Abmessungen der Bildpunkte < 300 μm sind, und wobei das Graustufenbild von der den Mikrolinsen abgewandten Seite der zweiten Schicht her sichtbar ist.

2. Mehrschichtkörper nach Anspruch 1, **dadurch gekennzeichnet,** **daß** die transparenten zweiten Teilbereiche eine bildliche Darstellung bilden, und daß die opaken ersten Teilbereiche einen Hintergrundbereich bilden, von dem sich die bildliche Darstellung abhebt.

3. Mehrschichtkörper nach Anspruch 1 oder 2, **dadurch gekennzeichnet,** **daß** der Flächenanteil der opaken ersten Teilbereiche zur Gesamtfläche der ersten und zweiten Teilbereiche 20% bis 60% ist.

4. Mehrschichtkörper nach Anspruch 2, **dadurch gekennzeichnet,** **daß** es sich bei der bildlichen Darstellung um eine geometrische Figur, um ein oder mehrere alphanumerische Zeichen oder um ein Logo handelt.

**5.** Mehrschichtkörper nach einem der vorhergehenden Ansprüche,
**dadurch gekennzeichnet,**
**daß** die Mikrolinsen (12, 32) und die Mikromuster (14m) eine repetitive Anordnung aufweisen.

**6.** Mehrschichtkörper nach Anspruch 5,
**dadurch gekennzeichnet,**
**daß** die Mikrolinsen (12, 32) und die Mikromuster (14m) jeweils in einem zweidimensionalen Raster angeordnet sind, wobei die Rasterweite insbesondere 20 μm bis 50 μm beträgt.

**7.** Mehrschichtkörper nach Anspruch 6,
**dadurch gekennzeichnet,**
**daß** die Raster der Mikrolinsen (12, 32) und der Mikromuster (14m) übereinstimmen.

**8.** Mehrschichtkörper nach Anspruch 6,
**dadurch gekennzeichnet,**
**daß** die Raster der Mikrolinsen (12, 32) und der Mikromuster (14m) verschieden sind.

**9.** Mehrschichtkörper nach Anspruch 6,
**dadurch gekennzeichnet,**
**daß** die Rasterweite der Mikrolinsen (12, 32) und/oder der Mikromuster (14m)konstant ist.

**10.** Mehrschichtkörper nach Anspruch 6,
**dadurch gekennzeichnet,**
**daß** die Rasterweite der Mikrolinsen (12, 32) und/oder der Mikromuster (14m) variabel ist.

**11.** Mehrschichtkörper nach einem der Ansprüche 7 bis 10,
**dadurch gekennzeichnet,**
**daß** die Raster der Mikrolinsen (12, 32) und der Mikromuster (14m) zueinander versetzt sind.

**12.** Mehrschichtkörper nach einem der Ansprüche 5 bis 10,
**dadurch gekennzeichnet,**
**daß** die Mikrolinsen (12, 32) und die Mikromuster (14m) im Register angeordnet sind.

**13.** Mehrschichtkörper nach einem der vorhergehenden Ansprüche,
**dadurch gekennzeichnet,**
**daß** Mikromuster (14m) einen unterschiedlichen Grauwert aufweisen, indem die Opazität der ersten Teilbereiche und/oder die Transparenz der zweiten Teilbereiche variiert ist.

**14.** Mehrschichtkörper nach Anspruch 1,
**dadurch gekennzeichnet,**
**daß** die Mikromuster der zweiten Schicht (14, 54) jeweils von einem als Mikroloch (54l) ausgebildeten transparenten zweiten Teilbereich und von einem den zweiten Teilbereich vollständig umgebenden opaken ersten Teilbereich der zweiten Schicht (14, 54) gebildet sind.

**15.** Mehrschichtkörper nach einem der vorhergehenden Ansprüche,
**dadurch gekennzeichnet,**
**daß** die ersten Schichten (10) und die zweite Schicht (14, 54) zusammen eine Dicke von 10 μm bis 1000 μm aufweisen.

**16.** Mehrschichtkörper nach Anspruch 15,
**dadurch gekennzeichnet,**
**daß** die ersten Schichten (10) und die zweite Schicht (14, 54) zusammen eine Dicke von 15 μm bis 50 μm aufweisen.

**17.** Mehrschichtkörper nach einem der vorhergehenden Ansprüche,
**dadurch gekennzeichnet,**
**daß** die zweite Schicht (14, 54) auf der der ersten Schicht (10) mit den ersten Mikrolinsen abgewandten Seite mit einer oder mehreren transparenten dritten Schichten (30) versehen ist, die auf ihrer der zweiten Schicht (14, 54) abgewandten Oberfläche ein Oberflächenprofil aufweist, das eine Anordnung einer Vielzahl von zweiten Mikrolinsen (32) bildet, und daß die Dicke dieser dritten Schicht (30) oder dieser dritten Schicht (30) und zwischen dieser dritten Schicht (30) und der zweiten Schicht (14, 54) angeordneten ein oder mehreren weiteren dritten Schichten (30) in etwa der Brennweite der zweiten Mikrolinsen (32) entspricht.

**18.** Mehrschichtkörper nach Anspruch 17,
**dadurch gekennzeichnet,**
**daß** die Mikromuster jeweils erste und zweite Mikromuster umfassen, wobei die ersten und die zweiten Mikromuster in Teilrastern angeordnet sind, die einen Raster bilden.

**19.** Mehrschichtkörper nach Anspruch 18,
**dadurch gekennzeichnet,**
**daß** der Raster ein 50%/50%-Raster ist.

**20.** Mehrschichtkörper nach Anspruch 17,
**dadurch gekennzeichnet,**
**daß** einander gegenüberliegend angeordnete Mikrolinsen (12, 32) der ersten Schicht (10) und der dritten Schicht (30) komplementär gefärbt ausgebildet sind.

**21.** Mehrschichtkörper nach einem der vorhergehenden Ansprüche,
**dadurch gekennzeichnet,**
**daß** die Mikrolinsen (12, 32, 42, 42') als refraktive Linsen ausgebildet sind.

**22.** Mehrschichtkörper nach einem der Ansprüche 1 bis 20,
**dadurch gekennzeichnet,**
**daß** die Mikrolinsen (12, 32, 42, 42') als diffraktive Linsen ausgebildet sind.

**23.** Wertgegenstand, beispielsweise Kreditkarte, Banknote oder Ausweis, mit einem in einem Fenster angeordneten Mehrschichtkörper nach Anspruch 1 bis 22.

**24.** Transparenter Körper, insbesondere Glasscheibe, mit einem Mehrschichtkörper nach Anspruch 1 bis 22.

**Claims**

**1.** Multilayer body for viewing from the front and rear side in transmitted light and/or in incident light, wherein the multilayer body (1, 3, 4, 5) has one or more transparent first layers (10) and has a second layer (14, 54) which has a plurality of micropatterns made of one or more opaque first sub-regions and one or more transparent second sub-regions, wherein in the opaque first sub-regions and in the transparent second sub-regions, the second layer (14, 54) has a surface structure having a different depth-to-width ratio, wherein the multilayer body is formed to be continuously transparent in the region of the second sub-regions, wherein one of the first layers (10) has a surface profile on its surface facing away from the second layer (14, 54), said surface profile forming an arrangement of a plurality of first microlenses (12), wherein the microlenses (12) have a diameter smaller than 50 $\mu$m and in each case, one pixel of the micropattern per microlens is selected by the microlenses (12), and wherein the thickness of this first layer (10) or this first layer (10) and one or more further first layers (10) arranged between this first layer (10) and the second layer (14, 54) corresponds approximately to the focal length of the first microlenses (12), wherein the micropatterns form pixels of a greyscale image and the dimensions of the pixels are < 300 $\mu$m, and wherein the greyscale image is visible from the side of the second layer, said side facing away from the microlenses.

**2.** Multilayer body according to claim 1,
**characterised in that**
the transparent second sub-regions form a pictorial representation and the opaque first sub-regions form a background region from which the pictorial representation stands out.

**3.** Multilayer body according to claim 1 or 2,
**characterised in that**
the area ratio of the opaque first sub-regions to the total area of the first and second sub-regions is 20% to 60%.

**4.** Multilayer body according to claim 2,
characterised that the pictorial representation is a geometric figure, one or more alphanumeric characters or a logo.

**5.** Multilayer body according to one of the preceding claims,
**characterised in that**
the microlenses (12, 32) and the micropatterns (14m) have a repetitive arrangement.

**6.** Multilayer body according to claim 5,
**characterised in that**
the microlenses (12, 32) and the micropatterns (14m) are respectively arranged in a two-dimensional grid, wherein the grid width is, in particular, 20 $\mu$m to 50 $\mu$m.

**7.** Multilayer body according to claim 6,
**characterised in that**
the grids of the microlenses (12, 32) and of the micropatterns (14m) match.

**8.** Multilayer body according to claim 6,
**characterised in that**
the grids of the microlenses (12, 32) and the micropatterns (14m) are different.

**9.** Multilayer body according to claim 6,
**characterised in that**
the grid width of the microlenses (12, 32) and/or the micropatterns (14m) is constant.

**10.** Multilayer body according to claim 6,
**characterised in that**
the grid width of the microlenses (12, 32) and/or the micropatterns (14m) is variable.

**11.** Multilayer body according to one of claims 7 to 10,
**characterised in that**
the grids of the microlenses (12, 32) and the micropatterns (14m) are offset from one another.

**12.** Multilayer body according to one of claims 5 to 10,
**characterised in that**
the microlenses (12, 32) and the micropatterns (14m) are arranged in register.

**13.** Multilayer body according to one of the preceding claims,
**characterised in that**
the micropatterns (14m) have a different grey-scale value by the opacity of the first sub-regions and/or the transparency of the second sub-regions being varied.

**14.** Multilayer body according to claim 1, **characterised in that** the micropatterns of the second layer (14, 54) are respectively formed from a transparent second sub-region formed as a microhole (541) and from an opaque first sub-region of the second layer (14, 54), said first sub-region fully surrounding the second sub-region.

**15.** Multilayer body according to one of the preceding claims, **characterised in that** together, the first layers (10) and the second layer (14, 54) have a thickness from 10 μm to 1000 μm.

**16.** Multilayer body according to claim 15, **characterised in that** together, the first layers (10) and the second layer (14, 54) have a thickness from 15 μm to 50 μm.

**17.** Multilayer body according to one of the preceding claims, **characterised in that** the second layer (14, 54) is provided with one or more transparent third layers (30) on the side facing away from the first layer (10), said first layer having the first microlenses, said third layer having a surface profile on its surface facing away from the second layer (14, 54), said surface profile forming an arrangement of a plurality of second microlenses (32), and the thickness of this third layer (30) or this third layer and one or more further third layers (30) arranged between this third layer (30) and the second layer (14, 54) corresponds approximately to the focal length of the second microlenses (32).

**18.** Multilayer body according to claim 17, **characterised in that** the micropatterns respectively comprise first and second micropatterns, wherein the first and the second micropatterns are arranged in sub-grids which form a grid.

**19.** Multilayer body according to claim 18, **characterised in that** the grid is a 50%/50% grid.

**20.** Multilayer body according to claim 19, **characterised in that** microlenses (12, 32) of the first layer (10) and of the second layer (30), said microlenses being arranged opposite each other, are formed with complementary colouring.

**21.** Multilayer body according to one of the preceding claims, **characterised in that** the microlenses (12, 32, 42, 42') are formed as refractive lenses.

**22.** Multilayer body according to one of claims 1 to 20, **characterised in that** the microlenses (12, 32, 42, 42') are formed as diffractive lenses.

**23.** Object of value, for example credit card, bank note or identity card, having a multilayer body according to claim 1 to 22 arranged in a window.

**24.** Transparent body, in particular glass sheet, having a multilayer body according to claim 1 to 22.

**Revendications**

**1.** Corps multicouches pour l'observation par transparence et/ou lumière réfléchie depuis le côté avant et le côté arrière, dans lequel le corps multicouches (1, 3, 4, 5) présente une ou plusieurs premières couches transparentes (10) et une deuxième couche (14, 54) qui présente une pluralité de micromotifs formés d'une ou plusieurs premières zones partielles opaques et d'une ou plusieurs deuxièmes zones partielles transparentes, dans lequel la deuxième couche (14, 54) présente dans les premières zones partielles opaques et dans les deuxièmes zones partielles transparentes, une structure de surface avec un rapport profondeur-largeur différent, dans lequel le corps multicouches est réalisé en continu de manière transparente dans la zone des deuxièmes zones partielles, dans lequel une des premières couches (10) présente sur sa surface opposée à la deuxième couche (14, 54) un profil de surface qui forme un agencement d'une pluralité de microlentilles (12), dans lequel les microlentilles (12) présentent un diamètre inférieur à 50 μm et respectivement un point d'image du micromotif par microlentille est sélectionné à travers les microlentilles (12), et dans lequel l'épaisseur de cette première couche (10) ou de cette première couche (10) et d'une ou plusieurs autres premières couches (10) agencées entre cette première couche (10) et la deuxième couche (14, 54) correspond à peu près à la distance focale des premières microlentilles (12), dans lequel les micromotifs forment des points d'image d'une image en niveaux de gris et les dimensions des points d'image sont < 300 μm, et dans lequel l'image en niveaux de gris est visible depuis le côté opposé aux microlentilles de la deuxième couche.

**2.** Corps multicouches selon la revendication 1, **caractérisé en ce que** les deuxièmes zones partielles transparentes forment une représentation graphique, et que les premières zones partielles opaques forment une zone d'arrière-plan, de laquelle ressort la représentation graphique.

3. Corps multicouches selon la revendication 1 ou 2,
**caractérisé en ce**
**que** la part de surface des premières zones partielles opaques par rapport à la surface totale des première et deuxième zones partielles est de 20 % à 60 %.

4. Corps multicouches selon la revendication 2,
**caractérisé en ce**
**que** la représentation graphique est une figure géométrique, un ou plusieurs caractères alphanumériques ou un logo.

5. Corps multicouches selon l'une quelconque des revendications précédentes,
caractérisé en
que les microlentilles (12, 32) et les micromotifs (14m) présentent un agencement répétitif.

6. Corps multicouches selon la revendication 5,
**caractérisé en ce**
**que** les microlentilles (12, 32) et les micromotifs (14m) sont agencés respectivement dans une trame bidimensionnelle, dans lequel la largeur de trame est en particulier de 20 $\mu$m à 50 $\mu$m.

7. Corps multicouches selon la revendication 6,
**caractérisé en ce**
**que** les trames des microlentilles (12, 32) et des micromotifs (14m) coïncident.

8. Corps multicouches selon la revendication 6,
**caractérisé en ce**
**que** les trames des microlentilles (12, 32) et des micromotifs (14m) sont différentes.

9. Corps multicouches selon la revendication 6,
**caractérisé en ce**
**que** la largeur de trame des microlentilles (12, 32) et/ou des micromotifs (14m) est constante.

10. Corps multicouches selon la revendication 6,
**caractérisé en ce**
**que** la largeur de trame des microlentilles (12, 32) et/ou des micromotifs (14m) est variable.

11. Corps multicouches selon l'une quelconque des revendications 7 à 10,
**caractérisé en ce**
**que** les trames des microlentilles (12, 32) et des micromotifs (14m) sont décalées l'une par rapport à l'autre.

12. Corps multicouches selon l'une quelconque des revendications 5 à 10,
**caractérisé en ce**
**que** les microlentilles (12, 32) et les micromotifs (14m) sont agencés dans le registre.

13. Corps multicouches selon l'une quelconque des revendications précédentes,
**caractérisé en ce**
**que** des micromotifs (14m) présentent un niveau de gris différent, par le fait que l'opacité des premières zones partielles et/ou la transparence des deux zones partielles varie.

14. Corps multicouches selon la revendication 1,
**caractérisé en ce**
**que** les micromotifs de la deuxième couche (14, 54) sont formés respectivement par une deuxième zone partielle transparente réalisée en tant que microtrou (541) et par une première zone partielle opaque de la deuxième couche (14, 54) entourant entièrement la deuxième zone partielle.

15. Corps multicouches selon l'une quelconque des revendications précédentes,
**caractérisé en ce**
**que** les premières couches (10) et la deuxième couche (14, 54) présentent ensemble une épaisseur de 10 $\mu$m à 1000 $\mu$m.

16. Corps multicouches selon la revendication 15,
**caractérisé en ce**
**que** les premières couches (10) et la deuxième couche (14, 54) présentent ensemble une épaisseur de 15 $\mu$m à 50 $\mu$m.

17. Corps multicouches selon l'une quelconque des revendications précédentes,
**caractérisé en ce**
**que** la deuxième couche (14, 54) est dotée sur le côté opposé à la première couche (10) avec les premières microlentilles, d'une ou plusieurs troisièmes couches transparentes (30), qui présente sur sa surface opposée à la deuxième couche (14, 54) un profil de surface qui forme un agencement d'une pluralité de deuxièmes microlentilles (32), et que l'épaisseur de cette troisième couche (30) ou de cette troisième couche (30) et des unes ou plusieurs autres troisièmes couches (30) agencées entre cette troisième couche (30) et la deuxième couche (14, 54) correspond à peu près à la distance focale des deuxièmes microlentilles (32).

18. Corps multicouches selon la revendication 17,
**caractérisé en ce**
**que** les micromotifs comprennent respectivement des premier et deuxième micromotifs, dans lequel les premier et deuxième micromotifs sont agencés dans des trames partielles, qui forment une trame.

19. Corps multicouches selon la revendication 18,
**caractérisé en ce**

**que** la trame forme une trame 50 %/50 %.

20. Corps multicouches selon la revendication 17, **caractérisé en ce que** des microlentilles (12, 32) agencées l'une en face de l'autre de la première couche (10) et de la troisième couche (30) sont réalisées colorées de manière complémentaire.

21. Corps multicouches selon l'une quelconque des revendications précédentes, **caractérisé en ce que** les microlentilles (12, 32, 42, 42') sont réalisées en tant que lentilles réfractives.

22. Corps multicouches selon l'une quelconque des revendications 1 à 20, **caractérisé en ce que** les microlentilles (12, 32, 42, 42') sont réalisées en tant que lentilles diffractives.

23. Objet de valeur, par exemple carte de crédit, billet de banque ou pièce d'identité, avec un corps multicouches selon la revendication 1 à 22 agencé dans une fenêtre.

24. Corps transparent, en particulier vitre, avec un corps multicouches selon la revendication 1 à 22.

**Fig. 1**

**Fig. 2a**

**Fig. 2b**

**Fig. 2c**

**Fig. 3a**

**Fig. 3b**

**Fig. 4a**

**Fig. 4b**

**Fig. 4c**

**Fig. 5**

**Fig. 6a**

**Fig. 6b**

**Fig. 6c**

**Fig. 7**

*Fig. 8*

**Fig. 9**

**Fig. 10**

*Fig. 11a*

*Fig. 11b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03061983 A1
- EP 0698256 B2
- US 20020012447 A1
- EP 1238373 B1